(19) **Europäisches Patentamt**
**European Patent Office**
**Office européen des brevets**

(11) **EP 2 855 998 B1**

(12) **FASCICULE DE BREVET EUROPEEN**

(45) Date de publication et mention
de la délivrance du brevet:
**27.12.2017 Bulletin 2017/52**

(21) Numéro de dépôt: **13731386.2**

(22) Date de dépôt: **31.05.2013**

(51) Int Cl.:
***C04B 14/26*** *(2006.01)*   ***C04B 38/10*** *(2006.01)*
*C04B 111/28* *(2006.01)*

(86) Numéro de dépôt international:
**PCT/FR2013/051232**

(87) Numéro de publication internationale:
**WO 2013/182786 (12.12.2013 Gazette 2013/50)**

(54) **PRODUITS D'ISOLATION THERMIQUE HAUTES PERFORMANCES**

HOCHLEISTUNGSFÄHIGE WÄRMEDÄMMUNGSPRODUKTE

HIGH PERFORMANCE THERMAL INSULATION PRODUCTS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.06.2012 FR 1255200**

(43) Date de publication de la demande:
**08.04.2015 Bulletin 2015/15**

(73) Titulaire: **Saint-Gobain Isover**
**92400 Courbevoie (FR)**

(72) Inventeurs:
• **GOLETTO, Valérie**
**F-94700 Maisons-Alfort (FR)**

• **SAISON, Tamar**
**F-75013 Paris (FR)**

(74) Mandataire: **Saint-Gobain Recherche
Département Propriété Industrielle
39 Quai Lucien Lefranc
93300 Aubervilliers (FR)**

(56) Documents cités:
**EP-A1- 2 246 318      WO-A1-03/097227
WO-A1-2010/126792   WO-A1-2011/095745
WO-A2-2010/046909   CN-A- 102 070 320**

## Description

La présente invention concerne un produit ou matériau d'isolation thermique haute performance, son procédé de fabrication, ainsi que son utilisation dans le domaine de la construction pour isoler les parois (extérieures ou intérieures) de bâtiments ou isoler sous toiture ou combler des interstices dans des matériaux (murs creux ou "cavity walls", canalisations, etc.), ce produit isolant pouvant se présenter sous forme de panneaux, ou éventuellement sous forme de granulés ou granulats, blocs, couches, projetés, moulés, etc.

Qu'il s'agisse du marché du neuf ou de la rénovation, la demande de produits d'isolation, en particulier thermique, performants, est toujours aussi importante. Outre des propriétés d'isolation accrues et le respect du cahier des charges des ouvrages du bâtiment, la demande pour des produits offrant plus de confort d'utilisation, de pérennité, d'économie de matière première, etc. dans une optique notamment de développement durable, est également croissante. Il est particulièrement avantageux, dans cette recherche de matériaux offrant une meilleure isolation thermique que lesdits matériaux présentent également, voire améliorent, d'autres propriétés recherchées dans la construction de bâtiments, notamment en matière d'allégement de charge, de résistance mécanique, d'isolation phonique, etc.

On connait actuellement une grande variété d'isolants thermiques. Parmi les produits les plus courants, on peut citer les isolants fibreux, à base de fibres naturelles ou synthétiques telles que la laine de verre ou la laine de roche, les isolants cellulaires du type polymère expansé tel que le polystyrène expansé ou extrudé, ou les mousses phénoliques ou de polyuréthane. Les performances thermiques des matériaux isolants essentiellement minéraux se traduisent par des valeurs de conductivité thermique $\lambda$ couramment supérieures à 35, en particulier de l'ordre de 40 mW/m.K, valeurs qui peuvent être plus basses dans le cas des isolants essentiellement organiques, par exemple dans le cas d'isolants cellulaires incorporant un gaz de plus faible conductivité thermique que l'air pour améliorer les performances thermiques. Un inconvénient de ces matériaux toutefois est la difficulté de conserver le gaz au sein de la matrice au cours du temps, le matériau perdant en vieillissant une partie de ses performances thermiques. De surcroit, pour les isolants organiques, la réaction au feu est mauvaise du fait de leur nature.

On peut également avoir recours à des matériaux dans lesquels un vide a été effectué de façon à former par exemple des panneaux sous vide. Ces isolants sont difficiles à utiliser car ils ne peuvent être ni découpés, ni percés, et ils peuvent subir une perte progressive du vide sur des longues durées.

On peut également citer comme isolants les aérogels, généralement sous forme de granules translucides ou de poudre fine, particulièrement performants en termes d'isolation thermique, mais dont les faibles propriétés mécaniques imposent de les utiliser avec des protections ou un agent de renforcement, ou les aérogels au sein de mats (ou nappes) formés de fibres enchevêtrées (mécaniquement résistantes) pour lesquels il peut être difficile de donner une forme déterminée. Ces aérogels sont difficiles et coûteux à obtenir à l'échelle industrielle, ils nécessitent des conditions de séchages délicates et leur combinaison avec d'autres isolants pour obtenir une tenue mécanique ou une forme adéquate peut être complexe. Leur utilisation reste donc limitée.

Les documents WO 2010/126792, WO 2011/095745 et WO 03/097227 concernent des compositions à base d'aérogels.

Le document CN 102070320 décrit un mortier pour isolation thermique à base de dolomite légèrement calcinée.

Le document WO 2010/046909 concerne des agrégats de ciment hydraulique isolants et résistant à la chaleur. Il existe par conséquent une forte demande pour développer des produits ou matériaux performants en termes d'isolation thermique, mais plus faciles et moins coûteux à fabriquer industriellement que les aérogels notamment. Outre ses bonnes performances thermiques (améliorées par rapport aux produits minéraux courants), il est souhaitable que le produit présente une bonne tenue (notamment au vieillissement, ou en terme de résistance mécanique ou autre : chimique, feu, etc.). Il est également souhaitable que ces améliorations se fassent sans alourdir la charge du produit, un produit allégé étant préférentiellement recherché. Il est également souhaitable qu'il reste facile à étaler lors de son durcissement et permette la réalisation de toutes les formes souhaitables, notamment par moulage (ou éventuellement par étalement ou projection d'une couche).

La présente invention a ainsi mis au point de nouveaux produits (ou matériaux) isolants permettant d'atteindre ce but et de pallier aux inconvénients cités précédemment, ces nouveaux matériaux étant essentiellement minéraux, étant obtenus directement (sans devoir recourir à une réaction chimique modifiant leur composition chimique) à partir de particules minérales de (ou possédant une) porosité avantageusement sub- (ou sous-) micronique (c'est-à-dire comprenant des pores de diamètres inférieurs à 1 $\mu$m), en particulier à partir de particules minérales de carbonates, ces carbonates présentant notamment l'avantage d'être des matières premières peu couteuses. Les matériaux obtenus à partir des carbonates usuels pouvant cependant fissurer au séchage lors de leur obtention et étant moins performants que ceux obtenus à partir d'autres matières premières micro-poreuses inorganiques telles que les particules de silice, la présente invention a cherché plus particulièrement à obtenir des produits isolants à base de carbonates plus performants, ces produits présentant à la fois résistance (notamment au feu) et tenue (en particulier mécanique, les matériaux notamment ne fissurant pas au séchage), et de bonnes performances thermiques (au moins équivalentes à celles des mousses organiques traditionnelles de polystyrène expansée ou de polyuréthane dont les valeurs de conductivité thermique sont au moins inférieures à 35 mW/m.K), et étant en outre légers et économiques.

La présente invention répond aux précédents objectifs en proposant un nouveau produit isolant thermique, et un procédé avantageux d'obtention dudit produit, ce procédé comprenant les étapes suivantes :

- au moins une étape de réalisation d'une mousse (aqueuse (ou humide)), à partir d'un mélange (ou ensemble), généralement aqueux (dispersion, en particulier suspension dans l'eau), (à base) de particules (solides) minérales mixtes (à base de carbonates de calcium et de magnésium), ces particules étant formées d'une partie calcique cristallisée et d'une partie magnésienne cristallisée (en particulier sous forme de plaquettes), les cristaux de la partie calcique et ceux de la partie magnésienne étant agrégés sous forme d'agrégats composites (ces agrégats étant eux-mêmes ou ayant été au moins partiellement agglomérés sous forme d'agglomérats), ladite partie calcique comprenant au moins un carbonate choisi parmi le groupe constitué de la calcite, de l'aragonite et de leurs mélanges, ladite partie magnésienne comprenant de l'hydromagnésite (avantageusement sous forme plaquettaire), ces particules présentant avantageusement une masse volumique en vrac (mesurée en particulier selon la norme EN459.2) supérieure ou égale à 100 kg/m$^3$ et inférieure ou égale à 250 kg/m$^3$, et présentant avantageusement une surface spécifique S supérieure à 5 m$^2$/g, en particulier supérieure à 20 m$^2$/g;

- au moins une étape de mise en forme (généralement pour former un monolithe et/ou une couche), notamment par moulage ou coulage ou projection (sur une surface ou paroi) de cette mousse ;

- au moins une étape de séchage (en laissant sécher ou en séchant) au moins partiel de la mousse ou du matériau ainsi obtenu.

La présente invention concerne également un nouveau produit (ou matériau) isolant thermique, au moins sous forme d'une mousse (c'est-à-dire sous forme d'une mousse ou comprenant au moins une mousse, ou à base d'au moins une mousse) rigide et/ou solide, formé à partir de (ou fait à partir de, ou à base de, ou formé de) particules minérales (avantageusement de porosité sub-micronique) mixtes (à base de carbonates de calcium et de magnésium) formées d'une partie calcique cristallisée et d'une partie magnésienne cristallisée (avantageusement sous forme de plaquettes), les cristaux de la partie calcique et ceux de la partie magnésienne étant agrégés sous forme d'agrégats composites (ces agrégats étant eux-mêmes et/ou ayant été au moins partiellement agglomérés sous forme d'agglomérats), ladite partie calcique comprenant au moins un carbonate choisi parmi le groupe constitué de la calcite, de l'aragonite et de leurs mélanges, ladite partie magnésienne comprenant de l'hydromagnésite (avantageusement sous forme plaquettaire), ces particules présentant avantageusement une masse volumique en vrac supérieure ou égale à 100 kg/m$^3$ et inférieure ou égale à 250 kg/m$^3$, ce produit présentant à la fois une bonne tenue et résistance et des propriétés thermiques améliorées (notamment par rapport à des matériaux obtenus à partir de particules de carbonates ne répondant pas à la définition précédente) comme recherché selon l'invention.

Avantageusement, les particules sélectionnées dans la présente invention sont telles qu'elles présentent une porosité sub- (ou sous-) micronique, cette porosité étant constituée de pores (dits submicroniques) de diamètres (c'est-à-dire présentant une distribution de diamètres) compris entre 10 nm et 1 μm (c'est-à-dire que chaque pore de cette catégorie présente un diamètre compris dans cette gamme, la distribution de l'ensemble des diamètres de ces pores étant plus ou moins étroite ou resserrée) en particulier entre 100 nm et 1 μm, notamment entre 500 nm et 1 μm.

Les particules sont également avantageusement de taille micronique (à noter que les particules, avant d'être dispersées dans un médium (dispersion utilisée dans le procédé selon l'invention), se présentent généralement sous forme d'une poudre, chaque grain de poudre, de taille généralement de l'ordre d'un à quelques millimètres, étant formé d'un nombre plus ou moins important de particules, éventuellement agglomérées), c'est-à-dire que ces particules présentent avantageusement une taille (on considère ici le diamètre médian D50 - ou diamètre d'au moins 50% (en poids) des particules) d'au moins 500 nm, de préférence d'au moins 750 nm, de façon particulièrement préféré d'au moins 900 nm, en particulier d'au moins 1 μm, notamment de quelques micromètres (en particulier entre 0.5 μm (ou 1 μm) et 6 μm, par exemple autour de 2-3 μm).

Avantageusement également, la masse volumique des particules en vrac (ou masse volumique apparente des particules, en mélange avec l'air) est supérieure ou égale à 100 kg/m$^3$ et inférieure ou égale à 250 kg/m$^3$, et notamment inférieure à 200 kg/m$^3$, et la masse volumique de la galette obtenue par séchage à 40 °C d'une dispersion de ces particules dans l'eau est inférieure à 600 kg/m$^3$, et de préférence inférieure à 450 kg/m$^3$.

En outre, le volume poreux des pores submicroniques des particules est préférentiellement d'au moins 0.8 cm$^3$/g (c'est-à-dire 0.8 cm$^3$ par gramme de matériau), en particulier d'au moins 1 cm$^3$/g (voire d'au moins 1.3 cm$^3$/g) et peut aller jusqu'à au moins 2 cm$^3$/g ou jusqu'à 2.3 cm$^3$/g notamment.

En outre, les particules sont avantageusement de surface spécifique S supérieure à 5 m$^2$/g, de préférence supérieure à 15 m$^2$/g, et notamment supérieure à 20 m$^2$/g.

Avantageusement, la masse volumique (apparente ou globale, c'est-à-dire mesurée sur l'ensemble du produit) du produit ou matériau isolant obtenu est inférieure à 300 kg/m$^3$, en particulier inférieure à 200 kg/m$^3$, notamment inférieure à 150 kg/m$^3$, voire le cas échéant inférieure à 100 kg/m$^3$.

On obtient conformément à l'invention des produits (mousses de carbonates) stables, présentant une bonne tenue et de bonnes propriétés d'isolation thermique, comme explicité et illustré ultérieurement, tout en restant économiques. On observe notamment une stabilisation des particules et des interfaces de la mousse (les interfaces de la mousse étant stabilisés par les particules submicroniques choisies) permettant une bonne mise en forme de la mousse et une bonne stabilité des particules et de la mousse humide (vis-à-vis notamment du drainage, du mûrissement d'Ostwald, de la coalescence, etc.), la stabilité de cette mousse humide étant importante car permettant de conserver la structure poreuse lors de son séchage et donc d'obtenir une mousse cohésive/solide (à l'opposé, des particules isolantes de type aérogels ne permettraient pas d'obtenir une telle mousse cohésive/solide, ces particules s'opposant au moussage ou ayant tendance à provoquer un effondrement de la mousse formée indépendamment). Le procédé selon l'invention permet de surcroit le contrôle de la taille des bulles de la mousse et de la fraction d'air incorporée, autorisant également l'obtention de mousses allégées/de densité contrôlée. Les matériaux obtenus ne fissurent pas au séchage et subissent une densification réduite.

Le procédé selon l'invention peut comprendre une étape préalable de préparation du mélange de particules minérales précité (notamment par mise en suspension (de la poudre formée) des particules dans l'eau), ou ce mélange (en particulier aqueux) peut avoir été préparé préalablement indépendamment du procédé et être un mélange prêt à l'emploi incorporant lesdites particules.

Avantageusement, le mélange de particules est tel que l'extrait sec, et en particulier tel que la proportion de particules précitées, est d'au moins 15% en poids, notamment d'au moins 16% en poids du mélange, et est généralement inférieur(e) à 40%, notamment inférieur(e) à 35%, en poids du mélange.

La réalisation de la mousse comprenant les particules/le mélange de particules (à partir dudit mélange ou desdites particules) peut se faire:

- par moussage direct : c'est-à-dire par l'introduction d'un gaz dans le mélange de particules par diverses méthodes telles que : l'agitation mécanique, le bullage d'un gaz, par exemple à travers un fritté (plaque poreuse à travers laquelle on fait passer le gaz pour générer la mousse), le bullage in-situ d'un gaz dissous (par exemple du pentane) ou d'un gaz par réaction chimique, notamment par décomposition (par exemple du peroxyde d'hydrogène en eau et dioxygène), etc, et/ou
- par incorporation : c'est à dire l'incorporation au mélange de particules (en dispersion) d'une mousse aqueuse déjà préformée, par exemple préparée par moussage à l'aide d'une solution aqueuse dans laquelle on introduit un gaz par l'une des méthodes ci-dessus,

le moussage même se faisant généralement en présence d'au moins un tensioactif (ajouté dans le mélange de particules dans le cas du moussage direct, ou le tensioactif étant présent dans la solution que l'on fait mousser pour former la mousse aqueuse dans le cas de l'incorporation).

Avantageusement, dans le procédé selon l'invention, une seule étape de séchage est opérée après l'étape de mise en oeuvre de la mousse (notamment aux alentours de 40°C ou plus, par exemple autour de 80°C); le procédé est en outre avantageusement dénué d'étape de frittage, une opération de séchage supplémentaire ou de frittage pouvant conduire à une densification du produit préjudiciable à l'obtention des propriétés thermiques recherchées.

Le produit isolant thermique selon l'invention intègre (ou comprend ou combine) avantageusement deux gammes de porosités différentes (ou distinctes), dont une première gamme (dite de macroporosité), constituée de pores (dits macropores) de diamètres (c'est-à-dire présentant une distribution de diamètres) compris entre 10 microns et 3 millimètres, en particulier compris entre quelques dizaines et quelques centaines de microns (et notamment entre 10 et 500 μm), et une seconde gamme (dite de porosité submicronique) constituée de pores (dits submicroniques) déjà évoqués précédemment. Ces deux porosités/ types de pores se différentient significativement par leur taille (qualifiée en l'occurrence par leur diamètre), les pores d'une catégorie (tels que les pores submicroniques) étant présents entre les pores d'une autre catégorie (tels que les macropores). De façon avantageuse, seulement (ces) deux porosités/types de pores sont présents (ou au moins majoritaires) dans le produit, cependant il n'est pas exclu que le produit puisse comprendre plus de deux porosités/types de pores. Le diamètre permettant de qualifier les pores submicroniques est calculé à partir des mesures de volumes poreux par porosimétrie à intrusion de mercure, à l'aide de l'équation de Washburn, le diamètre des macropores étant mesuré par microscope électronique à balayage (MEB) ou par tomographie X.

Le produit présente, comme déjà évoqué en rapport avec les particules, des pores (et est formé de particules présentant des pores) submicroniques de diamètres entre 10 nm et 1 μm, notamment entre 100 nm et 1 μm (les diamètres variant dans ces limites selon les particules initiales utilisées, par exemple selon leur surface spécifique, la distribution de diamètres pouvant en outre être plus ou moins étroite ou resserrée), le volume poreux pour ces pores submicroniques étant avantageusement supérieur à 0.8 cm$^3$/g (le volume poreux submicronique dans le produit pouvant diminuer légèrement par rapport à celui des particules initiales utilisées, mais restant de toutes façons supérieur à 0.8 cm³/g). Pour les macropores, le volume poreux est de préférence supérieur à 1 cm³/g (c'est-à-dire 1 cm³ par gramme de matériau), de préférence supérieur à 3 cm³/g, et en particulier varie de 5 à 15 cm³/g.

Le volume poreux pour les pores submicroniques ($V_{sm}$) est déterminé par porosimétrie à mercure réalisée sur des appareils de référence Pascal 140 et Pascal 440 commercialisés par la société Thermo Scientific, et est considéré comme étant égal au volume cumulé de mercure introduit dans les pores pour des pressions de mercure supérieures à 1.47 MPa (pression calculée par l'équation de Washburn -Washburn, 1921- pour un diamètre de pore de 1 micron) et allant notamment jusqu'à 400 MPa avec les appareils précités, les pores étant supposés cylindriques, en supposant la tension de surface du mercure égale à 480 dynes/cm et l'angle de contact particules minérales/mercure égal à 140°, le volume poreux étant donné en cm³ par gramme de matériau. Le volume poreux des macropores ($V_m$) est déterminé par la formule :

$$V_m = 1/ \rho_a - 1/ \rho_s - V_{sm}$$

$\rho_a$ étant la masse volumique apparente du matériau (correspondant au rapport de sa masse sur son volume), $1/\rho_a$ étant le volume spécifique du matériau, $\rho_s$ étant la masse volumique du squelette (partie du produit occupée par de la matière dense/sans pores), (majoritairement) minéral, mesurée par pycnomètre à hélium (norme ASTM C604- "standard test method for true specific gravity of refractory materials by gas-comparison pycnometer"), et $1/\rho_s$ étant le volume spécifique du squelette.

Le volume poreux total ($V_p$= $V_m$ + $V_{sm}$) du matériau (ou produit) isolant thermique selon l'invention est avantageusement supérieur à 1.8 cm³/g, et préférentiellement compris entre 5.5 et 18 cm³/g.

La création d'une porosité submicronique (ou volume poreux à l'échelle sub-micronique) emprisonnant de l'air dans une structure (une mousse) présentant déjà des (macro)pores (cette macroporosité provenant en particulier du moussage et correspondant aux bulles d'air introduites), et dans les zones (ou "murs") entre lesdits (macro)pores (ces murs, de quelques micromètres d'épaisseur notamment, étant formés et stabilisés par les particules sélectionnées comme explicité précédemment) améliore les performances thermiques du produit, tout en donnant un produit comparativement plus léger du fait de la présence de ces pores supplémentaires, cette porosité supplémentaire dans les murs de la mousse étant apportée notamment par la porosité intra particulaire (initialement présente dans les particules utilisées et résultant en particulier de leur synthèse), et résultant également de l'empilement de ces particules poreuses pour constituer les murs de la mousse (porosité inter particulaire). Les mousses ainsi obtenues selon l'invention présentent des propriétés d'isolation thermique améliorées par rapport à des mousses inorganiques plus classiques de même densité, ou par rapport à des isolants cellulaires organiques courants de type polystyrène, tout en étant (plus) économiques et restant légères, et tout en présentant une meilleure résistance au vieillissement et au feu que des produits organiques aux performances d'isolation thermiques équivalentes. Les produits/mousses selon l'invention sont compatibles aussi bien pour une utilisation comme matériau de comblement, que pour une utilisation en surface, notamment en façade.

Le produit isolant thermique selon l'invention se présente ainsi sous forme d'(au moins) une mousse solide et généralement rigide à base de particules poreuses et est, comme déjà évoqué, obtenu en particulier à partir du mélange d'au moins les éléments suivants : de l'eau (ou éventuellement une mousse aqueuse), des particules précitées (selon la définition de l'invention) de porosité submicronique (généralement en dispersion/suspension (dans (de) l'eau)), lesdites particules présentant (initialement, telles qu'introduites dans le mélange) préférentiellement une surface spécifique S d'au moins 5 m²/g (la surface spécifique étant donnée en m² par gramme de particule(s)), en particulier supérieure à 20 m²/g, et le cas échéant (au moins) un tensioactif et/ou éventuellement un liant organique et/ou un liant minéral et/ou des fibres (ou renforts), etc, comme explicité ultérieurement. Plutôt que "produit isolant thermique", on peut ainsi également définir le cas échéant le produit selon l'invention comme "une mousse destinée à l'isolation thermique ", cette mousse étant solide et généralement rigide, inorganique (majoritairement, comme indiqué ultérieurement), cette mousse (formant le produit précité selon l'invention) étant formée de particules comme précitées selon l'invention.

Les performances thermiques de l'isolant selon l'invention se traduisent par des valeurs de conductivité thermique λ (globale) inférieures à 40 mW/m.K, notamment comprises entre 20 et 40 mW/m.K (environ), en particulier inférieures à 35 mW/m.K (environ), descendant notamment jusqu'à 30 mW/m.K, voire encore moins (les performances thermiques étant d'autant meilleures que la conductivité thermique est basse). La conductivité thermique λ (en W/m.K) représente la quantité de chaleur passant au travers de l'isolant (d'un mètre d'épaisseur, par m² et lorsque la différence de température entre les deux faces est de 1°K). Les valeurs de conductivité thermique λ (comparées à pression et température identiques, en particulier à pression atmosphérique (1 bar) et température ambiante, sont mesurées dans le cadre de l'invention avec un fluxmètre de la série HFM 436 de la société NETZSCH™ en suivant les protocoles établis par les normes ASTM C518 et ISO 8301. La température de caractérisation est de l'ordre de 25 °C, et les mesures sont effectuées à pression atmosphérique, la précision des mesures étant estimée à 5%.

Le produit selon l'invention est plus facile d'obtention que des aérogels (lesquels en particulier n'engendrent pas la double porosité précédemment définie) ou d'autres mousses inorganiques, obtenus en partant de précurseurs/matières premières et en opérant une réaction chimique pour former la substance minérale les formant (tandis que, dans le cas du produit selon l'invention, la substance minérale employée - les particules- est déjà formée et simplement mise en forme sans recourir à des traitements visant à les dégrader ou à modifier leur composition chimique, comme il apparait dans le procédé selon l'invention). La structure poreuse du produit selon l'invention et/ou ledit produit est ainsi avantageusement formée sans réaction chimique ni altération comme précitées. La même observation peut être faite en comparaison de structures ou mousses méso- ou nanoporeuses existants dans d'autres domaines ou applications (par exemple utilisées pour des tamis moléculaires et obtenues par exemple par voie sol-gel à partir de précurseurs), qui, de spécificités et de contraintes différentes, résultent en particulier de réactions chimiques ou d'opérations mécaniques de dégradation. Le produit selon l'invention est en particulier obtenu par un procédé plus simple et économique de mise en oeuvre.

La masse volumique apparente du produit (ou mousse) selon l'invention est avantageusement inférieure à 300 kg/m$^3$, cette masse volumique pouvant varier selon la formulation (additifs, pH...) et les conditions de moussage (temps de moussage, vitesse d'agitation, géométrie de cuve et pale, etc.). La masse volumique est déterminée en faisant le rapport de la masse d'un volume donné du matériau, sur ledit volume. Généralement, la masse volumique du produit isolant selon l'invention est inférieure ou égale à 200 kg/m$^3$, en particulier inférieure à 150 kg/m$^3$, avantageusement inférieure à 130 kg/m$^3$, voire inférieure à 100 kg/m$^3$.

Le produit selon l'invention est majoritairement (à au moins 80% en poids, voire au moins 90%), voire uniquement, minéral/inorganique (les matières organiques éventuellement présentes pouvant être le cas échéant un liant organique, un greffage organique, etc.) ce qui permet d'assurer notamment une bonne tenue au feu. Le produit est en outre essentiellement (à au moins 80% en poids, voire au moins 90%), formé des particules précitées telles que mises en forme dans une structure de mousse. Ces particules sont solides et poreuses, et sont utilisées directement pour former le produit sans modification de leur formule.

Les particules précitées sont généralement (initialement) sous forme d'une poudre (chaque grain étant généralement formé d'un ensemble de particules), et présentent une granulométrie variant de préférence de 0.5 $\mu$m à 200 $\mu$m (notamment entre 1 et 100 $\mu$m) avec un diamètre médian D50 généralement de l'ordre de quelques micromètres, ce diamètre étant mesuré par analyse granulométrique par diffraction laser selon la norme ISO 13320-1 : 2000 notamment. La poudre est le cas échéant mise en dispersion, en particulier dans l'eau (de l'huile notamment pouvant également être ajoutée, par exemple pour un effet tensioactif et de consolidation, et/ou un liant notamment), et utilisée (ou incorporée) sous forme de ladite dispersion pour former le produit selon l'invention, le taux de particules mis en dispersion/suspension (les particules se dispersant dans le médium) dans l'eau étant avantageusement d'au moins 15%, en particulier d'au moins 16% en poids (par rapport à la dispersion).

La surface spécifique initiale S de ces particules est avantageusement supérieure à 5 m$^2$/g, en particulier supérieure à 10 m$^2$/g, notamment supérieure à 20 m$^2$/g, cette surface spécifique allant en particulier jusqu'à 30 m$^2$/g.

Les surfaces spécifiques, exprimées en m$^2$/g, sont mesurées par adsorption d'azote (théorie de l'adsorption multiple des gaz à l'aide de déterminations de Brunauer, Emmett et Teller- méthode BET) conformément à la norme ISO 9277 : 2010.

Les particules de carbonates répondant à la définition selon l'invention sont notamment des particules de carbonates obtenu(e)s par synthèse, en particulier par précipitation. La partie magnésienne formant lesdites particules est préférentiellement cristallisée sous forme de plaquettes (et en particulier comprend de l'hydromagnésite sous forme plaquettaire), les cristaux de la partie calcique et ceux de la partie magnésienne étant agrégés sous forme d'agrégats composites et ces agrégats étant eux-mêmes et/ou ayant été au moins partiellement agglomérés sous forme d'agglomérats.

La partie magnésienne formant les particules peut également comprendre un ou plusieurs autres composés magnésiens, en particulier du périclase et/ou de l'oxyhydroxyde de magnésium et/ou de la brucite. L'hydromagnésite présente dans la partie magnésienne est en particulier de formule $Mg_5(CO_3)_4(OH)_2.4H_2O$ et est avantageusement présente à une teneur comprise entre 10 et 60% en poids par rapport au poids des particules.

La partie calcique formant les particules peut également comprendre de l'hydroxyde de calcium, par exemple sous forme de portlandite. La partie calcique est avantageusement présente en une quantité allant de 35 à 75 % en poids par rapport au poids total des particules et la partie magnésienne est avantageusement présente en une quantité allant de 25 à 65 % en poids par rapport au poids total des particules. De préférence également, le rapport molaire Ca/Mg dans la composition des particules est compris entre 0,4 et 1,2.

Avantageusement les agrégats composites formant les particules sont constitués d'un coeur calcique sur lequel sont agrégées des plaquettes d'hydromagnésite.

Les particules peuvent être obtenues notamment par broyage(s) d'agglomérats, obtenus notamment par synthèse, en agglomérats et/ou agrégats plus petits, le cas échéant en plusieurs étapes (par exemple à une taille inférieure ou égale à 2 mm, et/ou à une taille plus petite, les grains de poudre généralement obtenus après broyage étant formés d'ensembles, éventuellement d'agglomérats, de particules). De préférence, la substance minérale formant lesdits agglomérats est obtenue selon la méthode de synthèse décrite dans la demande de brevet BE2012/0199 déposée en Belgique le 22 mars 2012 par la société Lhoist incorporée ici par référence.

Outre les particules minérales, le matériau selon l'invention est formé à partir d'eau ou d'une phase aqueuse (la présence d'un autre médium également, par exemple de l'huile et/ou un alcool, notamment du glycérol, n'étant pas exclue), médium(s) que l'on (a) fait mousser pour former une mousse aqueuse (ou liquide d'aspect savonneux, obtenu par un empilement désordonné de bulles de gaz dans une phase aqueuse), la phase aqueuse de départ non encore moussée comprenant en outre avantageusement au moins un composé tensioactif comme indiqué précédemment.

Comme tensioactif (ou agent moussant), on peut utiliser au moins un (sel de) tensioactif anionique, en particulier sélectionné parmi l'un des composés suivants de formule générale : $R-X^-, Y^+$, pour lequel R est une chaîne aliphatique de 10 à 24 atomes de carbones, $X^-$ est un groupement portant une charge négative (groupement carboxylate, sulfate, sulfonate, etc.), et $Y^+$ est un contre cation sélectionné parmi les groupements ammonium, sodium et potassium, par exemple des sels de carboxylates comportant 12 à 24 atomes de carbone, sélectionnés notamment parmi les sels de myristate, de palmitate, de stéarate, d'oléate, ou de la base conjuguée de l'acide béhénique, ou des carboxylates issus du traitement des acides gras du suif, ou encore d'autres bases conjuguées d'acides gras comme par exemple les savons/gels douche comprenant des acides gras issus de sources naturelles telles que le suif, l'huile de coco, etc, par exemple des tensioactifs tels que le stéarate d'ammonium, etc.

On peut également ou alternativement utiliser au moins un sel de tensioactif cationique sélectionné par exemple parmi les sels d'alkyltriméthyle ammonium contenant un groupement alkyle comportant 10 à 22 atomes de carbone, en particulier parmi au moins l'un des composés suivants : le bromure (ou chlorure) de dodécyltriméthylammonium, le bromure (ou chlorure) de tetradecyltriméthylammonium, le bromure (ou chlorure) d'hexadecyltriméthyl-ammonium, le bromure (ou chlorure) d'octadécyltriméthylammonium, le bromure (ou chlorure) de cétyltriméthylammonium, le chlorure de cétylbenzyldimethyl-ammonium, le bromure de cétyltriéthylammonium, le chlorure de tallowtriméthylammonium, etc.

Dans le cas de l'utilisation d'un tensioactif anionique et d'un tensioactif cationique conjointement, la préparation d'une mousse aqueuse peut être faite par exemple comme décrit dans la demande WO96/25475 ou à partir des kits bicomposants commercialisés par la société Allied Foam (référencés par exemple : 425A et 510B), constitués d'un premier mélange aqueux contenant un tensioactif anionique et d'un second mélange aqueux comprenant un tensioactif cationique et un latex, etc.

On peut également utiliser comme tensioactif(s) un ou plusieurs zwittérions. Parmi les zwittérions, on peut notamment citer des acides aminés ou dérivés, des molécules synthétisées à partir d'acides aminés, etc.

Généralement, le mélange (pour l'obtention du produit isolant ou le mélange de particules) ou la (phase aqueuse donnant la) mousse aqueuse comprend moins de 5% (en poids), avantageusement moins de 2%, voire même moins de 1% de tensioactif de préférence anionique, et/ou de zwittérion(s) (le taux minimal de tensioactif(s) étant en général d'au moins 0.08% par rapport au mélange ou d'au moins 0.1 % par rapport à l'eau).

On peut également ajouter d'autres additifs (généralement dans le mélange de particules ou le mélange utilisé pour obtenir la mousse/le produit selon l'invention ou dans la mousse), comme des agents rhéologiques (plastifiant, tel que la glycérine, etc.), des agents de surface, des charges minérales, ou d'autres matériaux renforçant la tenue mécanique (fibres de verre ou organique, silicate, gypse, ciment, liants organiques de type latex comme explicité ci-après,...), ou limitant la disproportion des bulles et réduisant leur taille (le moussage étant par exemple opéré sous atmosphère de perfluorohexane), etc.

Notamment, pour prévenir le mûrissement, on peut avantageusement ajouter des co-tensioactifs de type tensioactifs cationiques ou polymères cationiques, ou saponines, ou des polymères non ioniques de type éther de cellulose (tel que l'hydroxypropyl methylcellulose).

Le mélange (pour l'obtention du produit isolant ou le mélange de particules) peut également comprendre au moins un liant, organique et/ou minéral, utilisé, par exemple, pour permettre la liaison des particules entre elles et/ou la liaison des particules au reste de la structure du matériau.

Pour renforcer mécaniquement la mousse notamment, le liant peut être un liant organique comme indiqué précédemment; en particulier, il peut être avantageusement un latex (notamment choisi parmi ceux ayant tendance à former des films), en particulier une émulsion ou dispersion aqueuse d'une ou plusieurs substances polymères naturelles ou synthétiques, généralement thermoplastiques. Ce liant latex a préférentiellement une température de transition vitreuse Tg inférieure à 50°C, en particulier entre - 50°C et 25°C, de préférence entre - 20°C et 10°C, avantageusement entre - 10°C et 0°C, et a préférentiellement une température de filmification inférieure à la température ambiante, en vue d'obtenir la tenue recherchée pour les matériaux isolants à appliquer sur un support dans le domaine de la construction de bâtiments notamment. Le latex peut renfermer un (co)polymère de type vinylique (par exemple à base d'acétate de vinyle, en particulier d'homopolymère de polyacétate de vinyle, ou de copolymère d'acétate de vinyle et d'acide et/ou ester (méth)acrylique, maléïque, d'oléfine et/ou de chlorure de vinyle, ou à base de copolymère chlorure de vinyle/éthylène), ou de type acrylique (notamment un copolymère acrylonitrile/ester acrylique, ou styrène/acide ou ester acrylique silanisé et/ou dérivé d'acide carboxylique). Le latex peut notamment être un copolymère styrène-acrylique ou tout acrylique. Ces latex sont par exemple ceux commercialisés par la société BASF dans la gamme référencée par la dénomination Acronal®, en particulier l'Acronal® S 400.

Notamment, le produit isolant thermique selon l'invention peut être préparé à partir d'au moins les éléments suivants, dans les quantités exprimées en pourcentage pondéral par rapport à la masse totale du mélange : de 43 à 85 % d'eau, de 15 à 37% de particules minérales de carbonates précitées et de 0 à 20 %, notamment de 1 à 20%, d'additif(s) (liant, tensioactif, etc.).

L'étape de mise en forme comprend généralement des opérations de coulée ou moulage de la mousse comprenant les particules dans des cavités de forme ou section appropriée(s), ou de projection de la mousse sur une surface ou paroi. Le terme moulage est à prendre au sens large et recouvre toute forme de conformation, telles que la coulée en moule ouvert, l'extrusion à travers une filière et découpe de l'extrudât, etc, le séchage étant généralement consécutif à la mise en forme.

Le procédé selon l'invention avantageusement ne nécessite pas et même exclut après séchage tout traitement thermique de consolidation du matériau, ce traitement pouvant dans le cas présent dégrader les performances thermiques.

Le produit isolant thermique obtenu est solide (et généralement rigide) et multi- (en particulier bi-) poreux. Il est généralement (conçu) sous forme d'un panneau dont l'épaisseur est au moins égale à 5 mm. Il peut aussi être obtenu sous forme d'au moins une couche (appliquée par exemple sur une plaque de plâtre), ou le matériau à l'état encore humide peut être imprégné ou étalé sur un voile (par exemple non tissé...), ou le matériau peut être associé à une matrice de fibres ou autre couche, etc.

La présente invention concerne également l'utilisation du produit isolant/de la mousse selon l'invention dans le domaine de la construction, pour isoler notamment des parois de bâtiments ou isoler sous toiture.

La présente invention et ses avantages seront mieux compris à la lecture des exemples décrits ci-après, à titre illustratif et non limitatif:

Exemple selon l'invention:

Dans cet exemple, on a fabriqué une mousse de carbonate à partir de particules de carbonates formées d'une partie calcique cristallisée et d'une partie magnésienne cristallisée dans les proportions suivantes: 56% de $CaCO_3$, dont 41% sous la forme de calcite et 15% sous la forme d'aragonite, 42 % d'hydromagnésite sous forme plaquettaire, 0.5% de brucite et 1,1 % de portlandite. La masse volumique des particules en vrac était de 188 kg/m$^3$ environ et la surface spécifique était de 27,3 m$^2$/g. Ces particules présentaient une taille de 3.77$\mu$m (d50), des pores submicroniques de diamètres supérieurs à 100 nm et inférieurs à 1 micron et de volume poreux de 1.07 cm$^3$/g.

On a opéré comme suit :

On a dispersé dans 161.25 g d'eau 26.25 g de la poudre (particules) de carbonate précitée à l'aide d'une pale IKA (agitateur à hélice), puis on a ajouté à cette dispersion 5.83 g d'un latex (liant organique) commercialisé par la société BASF sous la référence Acronal S400. On a homogénéisé le mélange à l'aide d'une pale IKA à la vitesse de 1500 tr/min.

Dans un second récipient, on a préparé une mousse aqueuse à partir de deux solutions de tensioactifs commercialisées par la société Allied Foam sous les références AFT 425 A et AFT 510B et composées comme suit :

- référence AFT 425A constituée de (pourcentages pondéraux):

  - Mélange de tensioactifs cationiques appartenant à la classe des alkyls à longues chaîne : 50-60%
  - Mélange de tensioactifs phénoxyle non ionique : 10-20%
  - Ethanol : 5-8%
  - Eau : 12-35%

- référence AFT 510B constituée de:

  - Mélange de polymères acrylique : 25-35%
  - Mélange de tensioactifs anioniques appartenant à la classe des acides gras : 15-30%
  - Eau : 35-60%

On a prélevé 10 g de AFT425A auxquels on a ajouté 100 g d'eau. On a fait mousser le mélange par action mécanique à l'aide d'un robot ménager de la marque Kenwood pendant 3 min à vitesse maximale. On a ajouté ensuite sous agitation en environ 1 min, 20 g de la solution AFT 510 B et on a mélangé l'ensemble pendant 3 min 30 à vitesse maximale à l'aide du robot ménager.

Pour préparer la mousse de carbonate, on a prélevé 9.45 g de la mousse liquide résultante que l'on a introduit à la spatule dans la dispersion aqueuse à base de carbonate et d'Acronal S400. On a homogénéisé l'ensemble à l'aide de la pale IKA à la vitesse de 600 tr/min.

La mousse humide a ensuite été coulée dans un moule en téflon et placée à l'étuve à 40°C pendant une nuit.

Le produit selon l'invention obtenu, sous forme d'une mousse solide/rigide présentant deux gammes de porosités (en particulier des macropores de diamètres compris entre 10 $\mu$m et 3 mm, et des pores submicroniques de diamètres supérieurs à 100 nm et inférieurs à 1 micron), a été caractérisé selon les méthodes mentionnées plus avant dans le texte, les valeurs obtenues étant les suivantes :

- Masse volumique : 103 kg/m$^3$ ;
- volume poreux submicronique : 0.84 cm$^3$/g ;
- Conductivité thermique : 33 mW/m.K +/-5%.

Les valeurs indiquées précédemment montrent que les produits inorganiques isolant thermiques obtenus présentaient une faible masse volumique en même temps que des performances thermiques avantageuses.

Exemple comparatif 1 :

On a procédé comme dans l'exemple précédent, en remplaçant le carbonate dudit exemple par un carbonate commercialisé sous la référence Socal P2 par la société Solvay, ce carbonate étant formé de calcite pure. La masse volumique des particules en vrac était de 480 kg/m$^3$.

Il n'a pas été possible d'obtenir un échantillon avec une masse volumique équivalente présentant une tenue suffisante pour pouvoir être manipulé et permettre une mesure de conductivité thermique.

Exemple comparatif 2 :

On a procédé comme dans l'exemple selon l'invention, en remplaçant les particules de carbonate par des particules d'aérogels commercialisés sous la référence P300 par la société Cabot. La masse volumique des particules en vrac était de 65-85 kg/m$^3$.

Après dispersion des particules dans l'eau, on a obtenu une pâte humide (et non une dispersion fluide), le mélange obtenu après ajout du liant latex restant sous forme d'une pâte. Après introduction de la mousse aqueuse dans cette pâte, on a observé en cas d'arrêt de l'agitation une séparation de phases progressive avec une phase aqueuse fluide dessous et des particules d'aérogels surnageant. En coulant après l'agitation le mélange dans un moule et le plaçant une nuit à l'étuve à 40°C, on a obtenu un produit très fragile se présentant, non pas sous forme d'une mousse rigide ou solide, mais sous forme d'un empilement de particules d'aérogels agglomérées par compaction et liées par le liant latex, l'incorporation des particules d'aérogel ayant entrainé l'effondrement de la mousse aqueuse préformée.

En outre, l'ajout lors de la dispersion des particules dans l'eau, de 5.83 g d'un tensioactif cationique (pour rendre les particules d'aérogel compatibles avec l'eau) commercialisé sous la référence Barlox 12 (à base d'oxyde d'alkyldiméthylamine ramifié) par la société Lonza n'a pas changé l'aspect du mélange obtenu (pâte humide et non dispersion fluide), ni l'observation, après introduction de la mousse aqueuse et arrêt de l'agitation, d'une séparation de phases (phase aqueuse très fluide et particules d'aérogels surnageant), et a abouti après séchage à un produit ne présentant pas une tenue suffisante pour permettre sa manipulation, les particules d'aérogel étant encore plus faiblement agglomérées par le liant.

Exemple comparatif 3 :

Dans cet exemple comparatif, on a essayé d'obtenir une mousse d'aérogels par moussage in-situ comme suit :

On a préparé une solution contenant 120 g d'eau et 7.5 g du tensioactif cationique Barlox 12 de l'exemple comparatif précédent.

On a dispersé dans cette solution 33.75 g des particules d'aérogels P300 de l'exemple comparatif précédent, à l'aide d'une pale IKA à 1500 tr/min jusqu'à mouiller l'ensemble des particules d'aérogels, puis on a ajouté à la pâte obtenue 24 g d'un latex (liant) commercialisé par la société BASF sous la référence Acronal S400. On a mélangé et essayé de faire mousser le mélange par action mécanique à l'aide d'un robot ménager de la marque Kenwood à vitesse maximale pendant 10 min.

Il n'a pas été possible d'obtenir une mousse, le mélange gardant l'aspect d'une pâte. En coulant le mélange dans un moule en téflon et le plaçant à l'étuve à 40°C pendant une nuit, on a obtenu un produit se présentant, non pas sous forme d'une mousse rigide ou solide, mais sous la forme d'un empilement de particules d'aérogels compactées liées par le liant latex présentant une masse volumique de l'ordre de 200 kg/m$^3$.

Les produits selon l'invention sont particulièrement appropriés pour l'isolation thermique haute performance en particulier dans le domaine de la construction pour isoler les parois (extérieures ou intérieures) de bâtiments ou isoler sous toiture. Les produits selon l'invention ont également des propriétés ou peuvent être utilisés avec avantages dans l'isolation acoustique, et les applications d'allègement de matériaux.

**Revendications**

1. Procédé de fabrication d'un produit isolant thermique, comprenant les étapes suivantes :

   - au moins une étape de réalisation d'une mousse à partir d'un mélange de particules minérales formées d'une partie calcique cristallisée et d'une partie magnésienne cristallisée, les cristaux de la partie calcique et ceux de la partie magnésienne étant agrégés sous forme d'agrégats composites, ladite partie calcique comprenant au moins un carbonate choisi parmi le groupe constitué de la calcite, de l'aragonite et de leurs mélanges, ladite partie magnésienne comprenant de l'hydromagnésite ;
   - au moins une étape de mise en forme, notamment par moulage ou coulage ou projection de cette mousse ;
   - au moins une étape de séchage au moins partiel de la mousse ou du matériau ainsi obtenu.

**2.** Procédé selon la revendication 1, **caractérisé en ce que** le mélange de particules est tel que l'extrait sec, et de préférence tel que la proportion de particules, est d'au moins 15% en particulier d'au moins 16% en poids du mélange, et est généralement inférieur(e) à 40% en poids du mélange.

**3.** Procédé selon l'une des revendications 1 à 2, **caractérisé en ce que** l'on ajoute dans le mélange de particules ou dans la mousse au moins un additif tel qu'un tensioactif, un liant organique ou inorganique, un agent rhéologique, un agent de surface et/ou des renforts.

**4.** Procédé selon la revendication 3, **caractérisé en ce que** l'on ajoute dans le mélange de particules ou dans la mousse un liant organique de type latex.

**5.** Produit isolant thermique, au moins sous forme d'une mousse rigide et/ou solide, ce matériau étant formé à partir de particules minérales formées d'une partie calcique cristallisée et d'une partie magnésienne cristallisée, les cristaux de la partie calcique et ceux de la partie magnésienne étant agrégés sous forme d'agrégats composites, ladite partie calcique comprenant au moins un carbonate choisi parmi le groupe constitué de la calcite, de l'aragonite et de leurs mélanges, ladite partie magnésienne comprenant de l'hydromagnésite.

**6.** Produit isolant thermique selon la revendication 5, **caractérisé en ce que** les particules sont de porosité sub-micronique, cette porosité étant constituée de pores de diamètres compris entre 10 nm et 1 $\mu$m, en particulier entre 100 nm et 1 $\mu$m, notamment entre 500 nm et 1 $\mu$m.

**7.** Produit isolant thermique selon l'une des revendications 5 ou 6, **caractérisé en ce que** les particules présentent une taille d'au moins 500 nm, de préférence d'au moins 750 nm, de façon particulièrement préféré d'au moins 900 nm, en particulier d'au moins 1 $\mu$m, notamment de quelques micromètres.

**8.** Produit isolant thermique selon l'une des revendications 5 à 7, **caractérisé en ce que** le volume poreux des pores submicroniques des particules est d'au moins 0.8 cm$^3$/g, notamment d'au moins 1 cm$^3$/g.

**9.** Produit isolant thermique selon l'une des revendications 5 à 8, **caractérisé en ce que** les particules présentant une masse volumique en vrac supérieure ou égale à 100 kg/m$^3$ et inférieure ou égale à 250 kg/m$^3$, et sont avantageusement de surface spécifique S supérieure à 5 m$^2$/g, en particulier supérieure à 20 m$^2$/g.

**10.** Produit isolant thermique selon l'une des revendications 5 à 9, **caractérisé en ce que** sa masse volumique est inférieure à 300 kg/m$^3$, en particulier inférieure à 200 kg/m$^3$, notamment inférieure à 150 kg/m$^3$, voire inférieure à 100 kg/m$^3$.

**11.** Produit isolant thermique selon l'une des revendications 5 à 10, **caractérisé en ce qu'**il intègre deux gammes de porosités différentes, dont avantageusement une première gamme constituée de macropores de diamètres compris entre 10 microns et 3 mm, et une seconde gamme constituée de pores submicroniques de diamètres entre 10 nm et 1 $\mu$m, le volume poreux total du matériau isolant thermique étant avantageusement supérieur à 1.8 cm$^3$/g.

**12.** Produit isolant thermique selon l'une des revendications 5 à 11, **caractérisé en ce qu'**il est majoritairement inorganique.

**13.** Produit isolant thermique selon l'une des revendications 5 à 12, **caractérisé en ce que** la partie magnésienne formant les particules est cristallisée sous forme de plaquettes, et en particulier comprend de l'hydromagnésite sous forme plaquettaire, les cristaux de la partie calcique et ceux de la partie magnésienne étant agrégés sous forme d'agrégats composites et ces agrégats étant eux-mêmes ou ayant été avantageusement au moins partiellement agglomérés sous forme d'agglomérats, les agrégats composites étant de préférence constitués d'un coeur calcique sur lequel sont agrégées des plaquettes d'hydromagnésite.

**14.** Produit isolant thermique selon l'une des revendications 5 à 13, **caractérisé en ce que** la partie magnésienne formant les particules comprend également du périclase et/ou de l'oxyhydroxyde de magnésium et/ou de la brucite, et **en ce que** la partie magnésienne est avantageusement présente en une quantité allant de 25 à 65 % en poids par rapport au poids total des particules.

**15.** Produit isolant thermique selon l'une des revendications 5 à 14, **caractérisé en ce que** l'hydromagnésite est de formule Mg$_5$(C0$_3$)$_4$(OH)$_2$.4H$_2$0 et est avantageusement présente à une teneur comprise entre 10 et 60% en poids par rapport au poids des particules.

**16.** Produit isolant thermique selon l'une des revendications 5 à 15, **caractérisé en ce que** la partie calcique formant les particules comprend également de l'hydroxyde de calcium, par exemple sous forme de portlandite, et est avantageusement présente en une quantité allant de 35 à 75 % en poids par rapport au poids total des particules.

**17.** Produit isolant thermique selon l'une des revendications 5 à 16, **caractérisé en ce que** le rapport molaire Ca/Mg dans les particules est compris entre 0,4 et 1,2.

18. Produit isolant thermique selon l'une des revendications 5 à 17, **caractérisé en ce qu'**il est obtenu à partir du mélange d'au moins les éléments suivants : de l'eau ou une mousse aqueuse, des particules minérales formées d'une partie calcique cristallisée et d'une partie magnésienne cristallisée, les cristaux de la partie calcique et ceux de la partie magnésienne étant agrégés sous forme d'agrégats composites, ladite partie calcique comprenant au moins un carbonate choisi parmi le groupe constitué de la calcite, de l'aragonite et de leurs mélanges, ladite partie magnésienne comprenant de l'hydromagnésite, ces particules étant généralement incorporées à la mousse ou à l'eau sous forme d'une dispersion/suspension, lesdites particules présentant une surface spécifique S préférentiellement supérieure à 5 m$^2$/g, en particulier supérieure à 20 m$^2$/g, et le cas échéant un liant organique et/ou un liant minéral, et/ou un tensioactif et/ou des renforts.

19. Produit isolant thermique selon l'une des revendications 5 à 18, caractérisé en qu'il est obtenu à partir d'un mélange comprenant également un liant organique, en particulier un liant latex.

20. Utilisation du produit selon l'une des revendications 5 à 19 pour l'isolation thermique de bâtiments.

**Patentansprüche**

1. Verfahren zur Herstellung eines Wärmedämmprodukts, das die folgenden Schritte umfasst:

    - mindestens einen Schritt des Herstellens eines Schaums aus einem Gemisch aus anorganischen Partikeln, die aus einem kristallisierten Kalziumanteil und einem kristallisierten Magnesiumanteil gebildet sind, wobei die Kristalle des Kalziumanteils und jene des Magnesiumanteils in Form von Verbundaggregaten aggregiert sind, wobei der Kalziumanteil mindestens ein Carbonat umfasst, das ausgewählt ist aus der Gruppe bestehend aus Kalkspat, Aragonit und deren Gemischen, wobei der Magnesiumanteil Hydromagnesit umfasst;
    - mindestens einen Schritt des Formgebens, insbesondere durch Formen oder Gießen oder Sprühen dieses Schaums;
    - mindestens einen Schritt des zumindest teilweisen Trocknens des Schaums oder des so erhaltenen Materials.

2. Verfahren nach Anspruch 1, **dadurch gekenn-**

zeichnet, dass das Partikelgemisch dem Trockenextrakt und bevorzugt dem Anteil an Partikeln entspricht und mindestens 15 Gew.-%, insbesondere mindestens 16 Gew.-% des Gemischs, beträgt und im Allgemeinen unter 40 Gew.-% des Gemischs liegt.

3. Verfahren nach einem der Ansprüche 1 bis 2, **dadurch gekennzeichnet, dass** dem Partikelgemisch oder dem Schaum mindestens ein Additiv zugesetzt wird wie beispielsweise ein Tensid, ein organisches oder anorganisches Bindemittel, ein rheologisches Mittel, ein Oberflächen- und/oder Verfestigungsmittel.

4. Verfahren nach Anspruch 3, **dadurch gekennzeichnet, dass** dem Partikelgemisch oder dem Schaum ein organisches Mittel vom Typ Latex zugesetzt wird.

5. Wärmedämmprodukt, mindestens in Form eines starren und/oder festen Schaums, wobei dieses Material aus anorganischen Partikeln gebildet ist, die aus einem kristallisierten Kalziumanteil und einem kristallisierten Magnesiumanteil gebildet sind, wobei die Kristalle des Kalziumanteils und jene des Magnesiumanteils in Form von Verbundaggregaten aggregiert sind, wobei der Kalziumanteil mindestens ein Carbonat umfasst, das ausgewählt ist aus der Gruppe bestehend aus Kalkspat, Aragonit und deren Gemischen, wobei der Magnesiumanteil Hydromagnesit umfasst.

6. Wärmedämmprodukt nach Anspruch 5, **dadurch gekennzeichnet, dass** die Partikel eine Porosität im Submikron-Bereich aufweisen, wobei diese Porosität aus Poren mit Durchmessern von 10 nm bis 1 μm, inbesondere von 100 nm bis 1 μm, besonders von 500 nm bis 1 μm besteht.

7. Wärmedämmprodukt nach einem der Ansprüche 5 bis 6, **dadurch gekennzeichnet, dass** die Partikel eine Größe von mindestens 500 nm, bevorzugt von mindestens 750 nm, besonders bevorzugt von mindestens 900 nm, inbesondere von mindestens 1 μm, besonders von einigen Mikrometern aufweisen.

8. Wärmedämmprodukt nach einem der Ansprüche 5 bis 7, **dadurch gekennzeichnet, dass** das Porenvolumen der submikronischen Poren der Partikel mindestens 0,8 cm$^3$/g, besonders mindestens 1 cm$^3$/g beträgt.

9. Wärmedämmprodukt nach einem der Ansprüche 5 bis 8, **dadurch gekennzeichnet, dass** die Partikel eine Schüttdichte von über oder gleich 100 kg/m$^3$ und unter oder gleich 250 kg/m$^3$ aufweisen und vorteilhafterweise eine spezifische Oberfläche S von über 5 m²/g, insbesondere von über 20 m²/g, aufweisen.

10. Wärmedämmprodukt nach einem der Ansprüche 5 bis 9, **dadurch gekennzeichnet, dass** die Schüttdichte unter 300 kg/m³, insbesondere unter 200 kg/m³, besonders unter 150 kg/m³ beziehungsweise unter 100 kg/m³, liegt.

11. Wärmedämmprodukt nach einem der Ansprüche 5 bis 10, **dadurch gekennzeichnet, dass** es zwei unterschiedliche Porositätsbereiche beinhaltet, davon vorteilhafterweise einen ersten Bereich, bestehend aus Makroporen von 10 Mikron bis 3 mm Durchmesser, und einen zweiten Bereich, bestehend aus submikronischen Poren von 10 nm bis 1 μm Durchmesser, wobei das Gesamtporenvolumen des Wärmedämmmaterials vorteilhafterweise über 1,8 cm³/g liegt.

12. Wärmedämmprodukt nach einem der Ansprüche 5 bis 11, **dadurch gekennzeichnet, dass** es mehrheitlich anorganisch ist.

13. Wärmedämmprodukt nach einem der Ansprüche 5 bis 12, **dadurch gekennzeichnet, dass** der die Partikel bildende Magnesiumanteil in Form von Plättchen kristallisiert ist und insbesondere Hydromagnesit in Plättchenform umfasst, wobei die Kristalle des Kalziumanteils und jene des Magnesiumanteils in Form von Verbundaggregaten aggregiert sind und diese Aggregate selbst agglomeriert oder vorteilhafterweise mindestens teilweise in Form von Agglomeraten agglomeriert sind, wobei die Verbundaggregate bevorzugt aus einem Kalziumkern bestehen, auf dem Hydromagnesitplättchen aggregiert sind.

14. Wärmedämmprodukt nach einem der Ansprüche 5 bis 13, **dadurch gekennzeichnet, dass** der die Partikel bildende Magnesiumanteil auch Periklas und/oder Magnesiumoxyhydroxid und/oder Brucit umfasst und dass der Magnesiumanteil vorteilhafterweise in einer Menge von 25 bis 65 Gew.-% im Verhältnis zum Gesamtgewicht der Partikel vorliegt.

15. Wärmedämmprodukt nach einem der Ansprüche 5 bis 14, **dadurch gekennzeichnet, dass** das Hydromagnesit die Formel $Mg_5(CO_3)_4(OH)_2.4H_2O$ hat und vorteilhafterweise in einem Gehalt von 10 bis 60 Gew.-% im Verhältnis zum Gewicht der Partikel vorliegt.

16. Wärmedämmprodukt nach einem der Ansprüche 5 bis 15, **dadurch gekennzeichnet, dass** der die Partikel bildende Kalziumanteil auch Kalziumhydroxid umfasst, zum Beispiel in Form von Portlandit, und vorteilhafterweise in einer Menge von 35 bis 75 Gew.-% im Verhältnis zum Gesamtgewicht der Partikel vorliegt.

17. Wärmedämmprodukt nach einem der Ansprüche 5 bis 16, **dadurch gekennzeichnet, dass** das Molverhältnis von Ca/Mg in den Partikeln zwischen 0,4 und 1,2 liegt.

18. Wärmedämmprodukt nach einem der Ansprüche 5 bis 17, **dadurch gekennzeichnet, dass** es aus dem Gemisch von mindestens den folgenden Elementen erhalten wird: Wasser oder einem wässrigen Schaum, anorganischen Partikeln, die aus einem kristallisierten Kalziumanteil und einem kristallisierten Magnesiumanteil gebildet sind, wobei die Kristalle des Kalziumanteils und jene des Magnesiumanteils in Form von Verbundaggregaten aggregiert sind, wobei der Kalziumanteil mindestens ein Carbonat umfasst, das ausgewählt ist aus der Gruppe bestehend aus Kalkspat, Aragonit und deren Gemischen, wobei der Magnesiumanteil Hydromagnesit umfasst, wobei diese Partikel im Allgemeinen im Schaum oder im Wasser in Form einer Dispersion/Suspension eingearbeitet sind, wobei die Partikel eine spezifische Oberfläche S von vorzugsweise über 5 m²/g, insbesondere von über 20 m²/g, und gegebenenfalls ein organisches Bindemittel und/oder ein anorganisches Bindemittel und/oder ein Tensid und/oder Verfestigungsmittel aufweisen.

19. Wärmedämmprodukt nach einem der Ansprüche 5 bis 18, **dadurch gekennzeichnet**, das es aus einem Gemisch erhalten wird, das auch ein organisches Bindemittel, insbesondere ein Latexbindemittel umfasst.

20. Verwendung des Produkts nach einem der Ansprüche 5 bis 19 zur Wärmedämmung von Gebäuden.

## Claims

1. A process for the manufacture of a thermal insulating product, comprising the following stages:

- at least one stage of producing a foam from a mixture of mineral particles formed of a crystallized calcic part and of a crystallized magnesian part, the crystals of the calcic part and those of the magnesian part being aggregated in the form of composite aggregates, said calcic part comprising at least one carbonate chosen from the group consisting of calcite, aragonite and their mixtures and said magnesian part comprising hydromagnesite;
- at least one stage of shaping, in particular by molding or casting or projecting this foam;
- at least one stage of at least partial drying of the foam or the material thus obtained.

2. The process as claimed in claim 1, **characterized in that** the mixture of particles is such that the solids content, and preferably such that the proportion of particles, is at least 15% by weight, in particular at least 16% by weight, of the mixture and is generally less than 40% by weight of the mixture.

3. The process as claimed in either of claims 1 and 2, **characterized in that** at least one additive, such as a surfactant, an organic or inorganic binder, a rheological agent, a surface agent and/or reinforcers, is added to the mixture of particles or to the foam.

4. The process as claimed in claim 3, **characterized in that** an organic binder of latex type is added to the mixture of particles or to the foam.

5. A thermal insulating product, at least in the form of a rigid and/or solid foam, this material being formed from mineral particles formed of a crystallized calcic part and of a crystallized magnesian part, the crystals of the calcic part and those of the magnesian part being aggregated in the form of composite aggregates, said calcic part comprising at least one carbonate chosen from the group consisting of calcite, aragonite and their mixtures and said magnesian part comprising hydromagnesite.

6. The thermal insulting product as claimed in claim 5, **characterized in that** the particles are of submicronic porosity, this porosity being composed of pores with diameters of between 10 nm and 1 $\mu$m, in particular between 100 nm and 1 $\mu$m, especially between 500 nm and 1 $\mu$m.

7. The thermal insulating product as claimed in either of claims 5 and 6, **characterized in that** the particles exhibit a size of at least 500 nm, preferably of at least 750 nm, particularly preferably of at least 900 nm, in particular of at least 1 $\mu$m, especially of a few micrometers.

8. The thermal insulating product as claimed in one of claims 5 to 7, **characterized in that** the pore volume of the submicronic pores of the particles is at least 0.8 cm$^3$/g, in particular at least 1 cm$^3$/g.

9. The thermal insulating product as claimed in one of claims 5 to 8, **characterized in that** the particles exhibit a bulk density of greater than or equal to 100 kg/m$^3$ and less than or equal to 250 kg/m$^3$, and advantageously have a specific surface S of greater than 5 m$^2$/g, in particular of greater than 20 m$^2$/g.

10. The thermal insulating product as claimed in one of claims 5 to 9, **characterized in that** its density is less than 300 kg/m$^3$, in particular less than 200 kg/m$^3$, especially less than 150 kg/m$^3$, or even less than 100 kg/m$^3$.

11. The thermal insulating product as claimed in one of claims 5 to 10, **characterized in that** it incorporates two different ranges of porosities, advantageously including a first range consisting of macropores with diameters of between 10 microns and 3 mm and a second range consisting of submicronic pores with diameters of between 10 nm and 1 $\mu$m, the total pore volume of the thermal insulating material advantageously being greater than 1.8 cm$^3$/g.

12. The thermal insulating product as claimed in one of claims 5 to 11, **characterized in that** it is predominantly inorganic.

13. The thermal insulating product as claimed in one of claims 5 to 12, **characterized in that** the magnesian part forming the particles is crystallized in the form of platelets and in particular comprises hydromagnesite in the platelet form, the crystals of the calcic part and those of the magnesian part being aggregated in the form of composite aggregates and these aggregates being themselves or having been advantageously at least partially agglomerated in the form of agglomerates, the composite aggregates preferably being composed of a calcic core on which hydromagnesite platelets are aggregated.

14. The thermal insulating product as claimed in one of claims 5 to 13, **characterized in that** the magnesian part forming the particles also comprises periclase and/or magnesium oxyhydroxide and/or brucite, and **in that** the magnesian part is advantageously present in an amount ranging from 25% to 65% by weight, with respect to the total weight of the particles.

15. The thermal insulating product as claimed in one of claims 5 to 14, **characterized in that** the hydromagnesite is of formula $Mg_5(CO_3)_4(OH)_2.4H_2O$ and is advantageously present at a content of between 10% and 60% by weight, with respect to the weight of the particles.

16. The thermal insulating product as claimed in one of claims 5 to 15, **characterized in that** the calcic part forming the particles also comprises calcium hydroxide, for example in the form of portlandite, and is advantageously present in an amount ranging from 35% to 75% by weight, with respect to the total weight of the particles.

17. The thermal insulating product as claimed in one of claims 5 to 16, **characterized in that** the Ca/Mg molar ratio in the particles is between 0.4 and 1.2.

18. The thermal insulating product as claimed in one of claims 5 to 17, **characterized in that** it is obtained from the mixture of at least the following components: water or an aqueous foam, mineral particles formed of a crystallized calcic part and of a crystallized magnesian part, the crystals of the calcic part and those of the magnesian part being aggregated in the form of composite aggregates, said calcic part comprising at least one carbonate chosen from the group consisting of calcite, aragonite and their mixtures and said magnesian part comprising hydromagnesite, these particles being generally incorporated in the foam or in the water in the form of a dispersion/suspension, said particles exhibiting a specific surface S preferably of greater than 5 $m^2$/g, in particular of greater than 20 $m^2$/g, and, if appropriate, an organic binder and/or a mineral binder and/or a surfactant and/or reinforcers.

19. The thermal insulating product as claimed in one of claims 5 to 18, **characterized in that** it is obtained from a mixture also comprising an organic binder, in particular a latex binder.

20. The use of the product as claimed in one of claims 5 to 19 for the thermal insulation of buildings.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010126792 A
- WO 2011095745 A
- WO 03097227 A
- CN 102070320
- WO 2010046909 A
- BE 20120199
- WO 9625475 A